# EUROPEAN PATENT SPECIFICATION

(11) **EP 3 277 123 B1**
(45) Date of publication and mention of the grant of the patent: **29.04.2020**
(21) Application number: 15887955.1
(22) Date of filing: 30.03.2015
(51) Int. Cl.: A45F 3/04, A45C 15/00, A45C 3/00, A45C 3/06, A45C 13/02

(54) **SMART BAG WITH INTEGRATED DISPLAY**
INTELLIGENTER BEUTEL MIT INTEGRIERTER ANZEIGE
SAC INTELLIGENT AYANT UN DISPOSITIF D'AFFICHAGE INTÉGRÉ

(43) Date of publication of application: 07.02.2018
(73) Proprietor: Hewlett-Packard Development Company, L.P., Spring, TX 77389 (US)
(72) Inventor: BROOKS, Robert C., Houston, TX 77070 (US); AZAM, Syed S., Houston, TX 77070 (US); BIGGS, Kent E., Houston, TX 77070 (US)
(74) Representative: Liesegang, Eva
(86) International application number: PCT/US2015/023260
(87) International publication number: WO 2016/159946

(56) References cited:
- KR-A- 20130 019 801
- KR-B1- 101 489 620
- US-A1- 2006 061 546
- US-A1- 2013 012 133
- US-A1- 2014 000 771
- US-A1- 2014 041 772
- US-A1- 2014 274 204
- US-A1- 2014 350 716

## Description

### BACKGROUND

Individuals carry multiple devices that may require charging during the day. These devices may be charged via USB connection, via connection to a wall-mounted plug, via induction charging, and/or via other methods of providing power to a device. Individuals may carry multiple devices in a book bag, purse, or other type of carrier. If a device is in a book bag, purse, or other type of carrier, an individual may be unable to obtain information from the device without physically removing the device from the carrier.
A smart bag according to the preamble of claim 1 is known from US 2014/000771 A. A similar smart bag is known from KR 2013 0019801A.

### BRIEF DESCRIPTION OF THE DRAWINGS

The following detailed description references the drawings, wherein:
FIG. 1 is a depiction of an example smart bag with an integrated display;
FIG. 2 is a depiction of an example smart bag with an integrated display;
FIG. 3 is a depiction of an example smart bag with an integrated display;
FIG. 4 is a depiction of an example smart bag with an integrated display;
FIG. 5 is a depiction of an example smart bag with an integrated display;
FIG. 6 is a flowchart of an example method for execution by a smart bag with an integrated display; and
FIG. 7 is a flowchart of an example method for execution by a smart bag with an integrated display.

### DETAILED DESCRIPTION

The following detailed description refers to the accompanying drawings. Wherever possible, the same reference numbers are used in the drawings and the following description to refer to the same or similar parts. While several examples are described in this document, modifications, adaptations, and other implementations are possible. Accordingly, the following detailed description does not limit the disclosed examples. The proper scope of the present invention is defined by the appended claims.

Individuals carry multiple devices during the day that may require charging. For example, an individual may carry one or more phones for individual and work purposes, a laptop, a tablet, a camera, and/or other devices that require recharging.

These devices may be charged via USB connection, via connection to a wall-mounted plug, via induction charging, and/or via other methods of providing power to a device.

With all of these devices at varying power levels, an individual may have to charge one or more devices at a time, at various locations during the day, to ensure that the devices are available when the individual desires to use them. As such, an individual may always be looking to see where to plug in a device for charging.

Further, an individual carrying a device in a carrier (such as a book bag, purse, or other carrier) may be unable to access information from the device without physically removing it from the carrier.

To address these issues, a smart bag as defined in the appended claims is proposed. The smart bag provides charging capabilities by which an individual may charge some or all of his devices and may provide display functionality by which an individual may view information related to power management of the smart bag and devices and information related to the devices themselves.

The smart bag comprises a set of power sources integral to the smart bag, from which power may be provided to one or more devices in the bag. The smart bag may manage the provision of power to a set of devices from the set of power sources integral to the smart bag. For example, the smart bag may manage, for each individual device disposed in the smart bag, the provision of power from each of the set of power sources to that device. The smart bag may also recognize each device disposed in the smart bag and may provide power management responsive to recognizing a device. Such an example smart bag is described in US2017346307 A1, entitled "Smart Bag", filed January 26, 2015, with Attorney Docket No. 84030595.

The smart bag also comprises an external display integral to the smart bag. In addition to having power management functionality, the example smart bag also comprises display management functionality. The display management functionality may cause the display to depict power information related to power management of the smart bag and the devices and device information related to the set of electronic devices.

The smart bag (and/or display management functionality thereof) may enable the smart bag to communicate with each individual device of the set of devices through, for example, an application that may run on each individual device. The smart bag may automatically detect a device within a predetermined proximity of the smart bag, responsive to a device being inside the smart bag, and/or responsive to other information related to location of a device relative to the smart bag. For a detected device, the smart bag may receive information from the device and may display that information via the display. In some examples, the smart bag may transmit information that may be available to each device that could be used to facilitate communication with the smart bag. Each device may similarly transmit information to the smart bag that could be used to facilitate communication with the device. In some examples, the smart bag and the device may each respectively used the received information to authenticate each other.

The smart bag (and/or display management functionality thereof) may facilitate the selection of information to be displayed via the integral display of the smart bag. In some examples, a default set of information may be displayed via the integral display of the smart bag. The default set of information may comprise, for example, power information about an amount of power available via the set of power sources of the smart bag, a total amount of power available via the set of battery packs of the set of power sources, information about which devices are being charged (and/or their battery levels), and/or other default information. In some examples, there may be multiple default sets of information for display and the default set of information for the smart bag may be selected by a user of the smart bag (and/or by a user of a device communicably coupled to the smart bag).

In some examples, the smart bag (and/or display management functionality thereof) may receive information about the types of information to display. For example, types of information to display may comprise power information, device information, and/or other types of information.

Power information may comprise multiple categories of power information that could be displayed. The categories may include, for example, information about a total amount of power available via the bag, information about each power source, information about whether any of the power sources are receiving external power, information about whether any devices are being charged, information about whether any devices are sharing power, information about the bag being full (e.g., having no ability to include additional devices for charging), and/or other information related to power management of the smart bag.

Device information may comprise multiple categories of device information that could be displayed. The categories may include, for example, information from one or more displays of devices being charged, information about a number of devices from which information can be displayed, information relating to how information from multiple devices may be displayed via the integral display, information about applications running on devices from which information should be displayed, information about which alerts from a screen of a device to display, and/or other information related to data displayed on and/or from one or more devices communicably coupled to the smart bag.

The smart bag (and/or display management functionality thereof) may also receive user preferences that may indicate the types of information, categories, and devices from which information is to be displayed via the integral display.

The smart bag (and/or display management functionality) may also manage functionality related to the integral display. For example, the smart bag (and/or display management functionality) may cause the display to sleep if no motion or interaction is sensed for a predetermined amount of time. The smart bag (and/or display management functionality) may cause the display to flash responsive to a first set of conditions being met. The smart bag (and/or display management functionality) may also send alerts to devices communicably coupled to the smart bag responsive to a second set of conditions being met.

As mentioned above, a device may be communicably coupled to the smart bag. For example, the device may be authenticated to the smart bag, may be physically coupled to the smart bag via a power source of the smart bag, and/or may be otherwise communicably coupled to the smart bag. Such a device may provide information about the types of information and categories to display, may provide user preferences as to a default set of information to display, the types of information and categories to display and the devices from which to display them, conditions to cause the smart bag to respond in predetermined ways, and/or other information related to the smart bag. The device may also be able to access information about the smart bag, power information (similar to the power information described above), alerts sent from the smart bag, and/or other information.

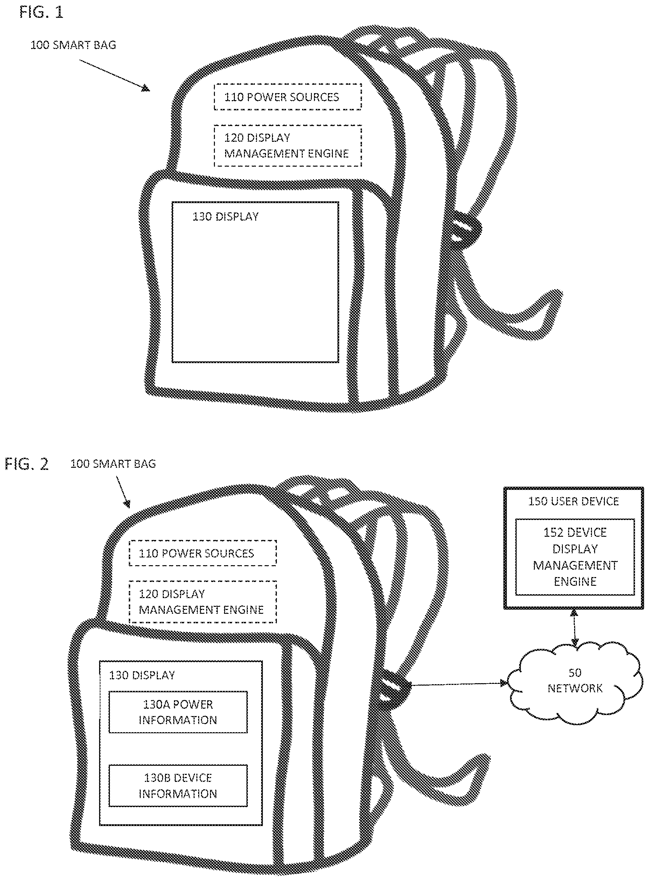

Referring now to the drawings, FIG. 1 is a block diagram of an example smart bag 100 with an integrated display. The smart bag 100 may comprise a book bag, purse, laptop bag, duffel bag, messenger bag, suitcase, or any other carrier suitable for executing the functionality described below. In the example depicted in FIG. 1, smart bag 100 includes a set of power sources 110, a display management engine 120 and an integrated display 130.

As detailed below, smart bag 100 may include a set of engines (e.g., display management engine 120, power management engine, etc.). Each of the engines may generally represent any combination of hardware and programming. For example, the programming for the engines may be processor executable instructions stored on a non-transitory machine-readable storage medium and the hardware for the engines may include at least one processor of the smart bag 100 to execute those instructions. In addition or as an alternative, each engine may include one or more hardware devices including electronic circuitry for implementing the functionality described below. While functionality may be ascribed to a particular engine, one or more engines of the smart bag 100 may perform that functionality.

The processor of smart bag 100 may be one or more central processing units (CPUs), microprocessors, and/or other hardware devices suitable for retrieval and execution of instructions stored in a machine-readable storage medium. The processor may fetch, decode, and execute program instructions to perform the functionality described herein, as described below. As an alternative or in addition to retrieving and executing instructions, the processor may include one or more electronic circuits comprising a number of electronic components for performing the functionality of instructions stored in the machine-readable storage medium.

In one example, the instructions can be part of an installation package that can be executed by the processor to implement the functionality described herein. In this case, the machine-readable storage medium may be a portable medium such as a CD, DVD, or flash drive or a memory maintained by a computing device from which the installation package can be downloaded and installed. In another example, the program instructions may be part of an application or applications already installed on smart bag 100.

The machine-readable storage medium may be any hardware storage device for maintaining data accessible to smart bag 100. For example, the machine-readable storage medium may include one or more hard disk drives, solid state drives, tape drives, and/or any other storage devices. The storage devices may be located in smart bag 100 and/or in another device in communication with smart bag 100. For example, the machine-readable storage medium may be any electronic, magnetic, optical, or other physical storage device that stores executable instructions. Thus, the machine-readable storage medium may be, for example, Random Access Memory (RAM), an Electrically-Erasable Programmable Read-Only Memory (EEPROM), a storage drive, an optical disc, and the like. As described in detail below, the machine-readable storage medium may be encoded with executable instructions. As detailed below, the machine-readable storage medium may maintain and/or store the data and information described herein.

As mentioned above, smart bag 100 also comprises a set of power sources 110. The power sources may be integrated into the bag in a manner appropriate for the power source. Power sources 110 may include a set of power cords, a set of solar panels, a set of battery packs, and/or any other power sources that may be integrated into smart bag 100. The power sources 110 of smart bag 100 are not limited to the examples described herein.

In some examples, the smart bag 100 may also comprise power connectors that may be coupled to a device. A power connector may comprise, for example, a USB port, another power connector, an induction surface, an adaptor that may provide power wirelessly (e.g., over wifi, via RFID technology, near-field communications, Bluetooth, over a local area network, and/or other wireless protocol), and/or other type of connector that may be operably coupled to a device to provide power. An individual power connector may also be operably coupled to a power source in a wired or wireless manner.

As mentioned above, smart bag 100 also comprises a display management engine 120. The display management engine 120 may manage the depiction of information via the display 130 integral to the smart bag 100.

The external display 130 is integral to the smart bag 100. The display 130 may be an LCD display, an HD display, and/or any other type of display that may be integrated into the bag. The display 130 may comprise touchscreen functionality, one or more physical buttons surrounding or integrated into the display, and/or other interactive components to facilitate user interaction with the display 130. In some examples, the information depicted on the display 130 may be customized by the individual using the smart bag 100. For example, the user may interact with the display using interactive components to change the information depicted on the display 130.

The display management engine 120 may recognize each device disposed in the smart bag 100 and may provide display management functionality responsive to recognizing a device. For example, the display management engine 120 may determine that a device disposed in the smart bag 100 responsive to the device being placed in the bag (e.g., based on a weight sensor of the bag). Responsive to determining that a device has been placed in the smart bag 100, the display management engine 120 may attempt to initiate communication with the device using one or several communication protocols available to the smart bag 100 (e.g., via near field communications, WiFi, Bluetooth, a wired connection, and/or other protocols).

In another example, the display management engine 120 may receive information from a user regarding the various devices that may be disposed in the bag. The display management engine 120 may initiate communication with the device using the one or several communication protocols available to the smart bag 100. The display management engine 120 may recognize the device by comparing information obtained during the initiating communication with the information received from the user.

In another example in which such information is not received from a user, the display management engine 120 may initiate communication with the device using the one or several communication protocols available to the smart bag 100 and may obtain information related to the device. The display management engine 120 may compare the obtained information with information stored in the machine-readable storage medium integral to the bag 100. Responsive to a match, the display management engine 120 may recognize the device. Responsive to the obtained information not matching information stored in the machine-readable storage medium, the display management engine 120 may store the obtained information in the machine-readable storage medium.

The information obtained from a device may comprise, for example, one or more of device identifier, battery charge level (e.g., percentage of battery charge available and/or other metric relating to power available at the device), information related to applications running on the device, information related to communication protocols available for the device, user preferences regarding information displayed by the smart bag 100 or information to be sent to the device from the smart bag 100, and/or other information from the device.

In another example, the display management engine 120 may periodically initiate communication with the devices in the smart bag 100 at predetermined intervals to recognize the devices in the smart bag 100. In some examples, the display management engine 120 may authenticate a device (e.g., by using the received information) and may only perform display management functionality responsive to authentication.

The display management engine 120 may also manage functionality related to the integral display. For example, the display management engine 120 may cause the display 130 to sleep, flash information, provide alerts, and/or perform other functionality.

The display management engine 120 may cause the display to sleep responsive to predetermined conditions being met. For example, the display management engine 120 may cause the display to sleep responsive to no motion or interaction being sensed for a predetermined amount of time. The predetermined conditions may be stored in a non-transitory machine-readable storage medium communicably coupled to the smart bag 100.

The display management engine 120 may cause the display to flash responsive to a first set of conditions being met. The first set of conditions may comprise, for example, recognition of a user device, a battery source reaching a predetermined threshold of power, determination that a user device is no longer recognized, receipt of information from a user device, and/or other conditions that may cause the display to flash. The first set of conditions may be stored in a non-transitory machine-readable storage medium communicably coupled to the smart bag 100.

The display management engine 120 may also send alerts to devices communicably coupled to the smart bag 100 responsive to a second set of conditions being met. The second set of conditions may comprise, for example, recognition of a user device, a battery source reaching a predetermined threshold of power, determination that a user device is no longer recognized, receipt of information from a user device, the smart bag 100 having a power availability below a predetermined threshold, determination that an external source may be providing power to the smart bag 100, and/or other conditions. This second set of conditions may be stored in a non-transitory machine-readable storage medium communicably coupled to the smart bag 100.

The display management engine 120 may cause the display to depict power information related to power management of the smart bag 100 and the devices and device information related to the set of electronic devices.

Power information may comprise multiple categories of power information that could be displayed. The categories may include, for example, information about a total amount of power available via the bag, information about each power source, information about whether any of the power sources are receiving external power, information about whether any devices are being charged, information about whether any devices are sharing power, information about the bag being full (e.g., having no ability to include additional devices for charging), and/or other information related to power management of the smart bag 100.

Device information may comprise multiple categories of device information that could be displayed. The categories may include, for example, information from one or more displays of devices being charged, information about a number of devices from which information can be displayed, information relating to how information from multiple devices may be displayed via the integral display, information about applications running on devices from which information should be displayed, information about which alerts from a screen of a device to display, and/or other information related to data displayed on and/or from one or more devices communicably coupled to the smart bag 100.

In some examples, the display management engine 120 may determine the information to be depicted on the display 130 based on a set of display factors. As such, the display 130 may depict default information until a display factor is met. Each display factor may be associated with corresponding display information for display 130.

The display factors may comprise, for example, a number of devices disposed in the smart bag 100, presence of a type of device disposed in the smart bag 100, a device running a particular application, an amount of power available at a device, an amount of power available at a power source, any combination thereof, and/or other display factors. The respective display information may comprise, for example, a set of categories of power information and/or a set of categories of display information. The display information may also comprise information related to timing of the information to be displayed, layout of the information to be displayed, and/or other display information. The display factors, display information, and their correspondence are not limited to the examples described herein.

In some examples, the display management engine 120 may consider the display factors in an ordered priority. The ordered priority may comprise information related to an order in which the display factors are considered. For example, the order may comprise presence of certain type of device, a number of devices in the smart bag 100, an amount of power available at a device, and/or other display factors.

The display management engine 120 may facilitate the selection of information to be displayed via the integral display of the smart bag 100. In some examples, a default set of information may be displayed via the integral display of the smart bag 100. The default set of information may comprise, for example, a default set of categories of power information and/or a default set of categories of device information. For example, a default set of information to be displayed may comprise information about an amount of power available via the set of power sources of the smart bag 100, a total amount of power available via the set of battery packs of the set of power sources, information about which devices are being charged (and/or their battery levels), and/or other default information. In some examples, there may be multiple default sets of information for display and the default set of information for the smart bag 100 may be selected by a user of the smart bag 100 (and/or by a user of a device communicably coupled to the smart bag 100). In some examples, a default set of information may comprise a default set of display factors.

In some examples, the display management engine 120 may receive, from a user of the smart bag 100 (and/or by a user of a device communicably coupled to the smart bag 100) information about the types of information to display. For example, the display management engine 120 may receive a set of categories of power information and/or a set of categories of device information to display, a set of display factors based on which information is displayed, and/or other information..

In some examples, the information received may comprise user preferences related to the display of information. The user preferences may comprise a set of conditions relating to the display of information, information related to providing alerts to one or more devices of the user, information related to display functionality of the integral display 130, and/or other user preferences related to display of information via the smart bag 100.

The set of conditions may comprise a user-specified default set of information to display and multiple sets of display conditions associated with respective sets of information to display. For example, for each individual display condition (e.g., event that may be recognized by the smart bag 100), a respective set of information may be associated. The respective set of information may comprise a set of categories of power information and/or device information to be displayed responsive to the display condition occurring. In some examples, the respective set of information may also comprise a customized set of display factors, a customized ordered priority of display factors, information relating to a layout of how the power information and/or device information is to be displayed, a timing associated with display of the information, devices from which the device information is to be obtained, and/or other information.

The information related to providing alerts to one or more devices of the user may comprise, for example, a set of alert conditions and a respective set of information be provided as an alert. Each individual alert condition (e.g., an event that may be recognized by smart bag 100) may be associated with a respective set of information. The respective set of information may comprise a set of categories of power information and/or device information to be displayed responsive to the alert condition occurring. In some examples, the respective set of information may also comprise information relating to which devices to provide an alert, whether to provide an alert to any device within a predetermined proximity of the smart bag 100, a timing associated with the alert, and/or other information related to the alert.

The information related to display functionality of the integral display 130 may comprise for example, a set of functional conditions and a respective set of responses. Each individual functional condition (e.g., an event that may be recognized by smart bag 100) may be associated with a respective response. The respective response may comprise, for example, causing the display to sleep, causing the display to flash, causing the display to depict an alert, and/or other responses.

In some examples, the machine-readable storage medium integral to the smart bag 100 may store information related to the sets of conditions related to display of information, the categories of power information, the categories of device information, information related to each device communicably coupled to the smart bag 100, and/or other information described, used, and/or determined based on the functionality described herein..

The display management engine 120 may determine information to display via the integral display by determining the set of electronic devices communicably coupled to the smart bag 100 (e.g., based on devices coupled over a network and devices obtaining power from the smart bag 100). The display management engine 120 may determine information to display via the integral display 130 responsive to a user device being recognized, responsive to display factors, responsive to receiving user preferences, and/or otherwise determine which information to display.

In some examples, responsive to recognizing a user device, the display management engine 120 may cause the display to depict information indicating that the user device was recognized (e.g., as an alert, a flash, or in a predetermined portion of the display 130 in which information related to recognized devices is depicted). Responsive to a device no longer being recognized, the display management engine 120 may cause the display to depict information indicating that the user device is no longer recognized (e.g., as an alert, a flash, or in a predetermined portion of the display 130 in which information related to recognized devices is depicted).

In some examples, responsive to a device being recognized by the smart bag 100, the display management engine 120 may determine whether to display information related to the device. For example, the display management engine 120 may determine whether user preferences have been received. Responsive to determining that user preferences have been received, the display management engine 120 may determine whether the user preferences include information about the recognized device. Responsive to the user preferences not including information about the recognized device, the display management engine 120 may cause the display 130 to depict information based on the user preferences. Responsive to no user preferences having been received, the display management engine 120 may depict default information (e.g., based on default information stored in the non-transitory machine-readable storage medium coupled to the smart bag 100.

FIG. 2 depicts an example smart bag 100 similar to or the same as smart bag 100 described with respect to FIG. 1. Smart bag 100 of FIG. 2 may depict power information 130a and device information 130b via the integral display 130. Smart bag 100 may also be communicably coupled to one or more user devices 150.

A user device 150 may comprise, for example, a laptop computing device, a desktop computing device, an all-in-one computing device, a tablet computing device, a mobile phone, an electronic book reader, a network-enabled appliance such as a "Smart" television, a server, and/or other electronic device suitable for executing the functionality described below. An individual user device 150 may be coupled to smart bag 100 via a network 50. The network 50 may be any suitable network for facilitating communication between the device 150 and the smart bag 100.

In the example depicted in FIG. 2, device 150 includes a device display management engine 152, and/or other components.

As detailed below, device 150 may include a set of engines (e.g., device display management engine 152, etc.). Each of the engines may generally represent any combination of hardware and programming. For example, the programming for the engines may be processor executable instructions stored on a non-transitory machine-readable storage medium and the hardware for the engines may include at least one processor of the device 150 to execute those instructions. In addition or as an alternative, each engine may include one or more hardware devices including electronic circuitry for implementing the functionality described below. While functionality may be ascribed to a particular engine, one or more engines of the device 150 may perform that functionality.

The processor of device 150 may be one or more central processing units (CPUs), microprocessors, and/or other hardware devices suitable for retrieval and execution of instructions stored in a machine-readable storage medium. The processor may fetch, decode, and execute program instructions to perform the functionality described herein, as described below. As an alternative or in addition to retrieving and executing instructions, the processor may include one or more electronic circuits comprising a number of electronic components for performing the functionality of instructions stored in the machine-readable storage medium.

In one example, the instructions can be part of an installation package that can be executed by the processor to implement the functionality described herein. In this case, the machine-readable storage medium may be a portable medium such as a CD, DVD, or flash drive or a memory maintained by a computing device from which the installation package can be downloaded and installed. In another example, the program instructions may be part of an application or applications already installed on device 150.

The machine-readable storage medium may be any hardware storage device for maintaining data accessible to device 150. For example, the machine-readable storage medium may include one or more hard disk drives, solid state drives, tape drives, and/or any other storage devices. The storage devices may be located in device 150 and/or in another device in communication with device 150. For example, the machine-readable storage medium may be any electronic, magnetic, optical, or other physical storage device that stores executable instructions. Thus, the machine-readable storage medium may be, for example, Random Access Memory (RAM), an Electrically-Erasable Programmable Read-Only Memory (EEPROM), a storage drive, an optical disc, and the like. As described in detail below, the machine-readable storage medium may be encoded with executable instructions. As detailed below, the machine-readable storage medium may maintain and/or store the data and information described herein.

Device display management engine 152 may facilitate recognition and/or authentication of the device 150 by the smart bag 100 (e.g., as described above). The device display management engine 152 may provide information about the types of information and categories to display, may provide user preferences, and/or may provide other information related to the smart bag 100. The device display management engine 152 may also be able to access information about the smart bag 100, power information (similar to the power information described above), alerts sent from the smart bag 100, and/or other information. For example, the device display management engine 152 may be able to access information stored in the non-transitory machine-readable storage medium coupled to the smart bag 100. The information accessed by the device display management engine 152 may be limited to information related to the device or may be any information available in the storage medium.

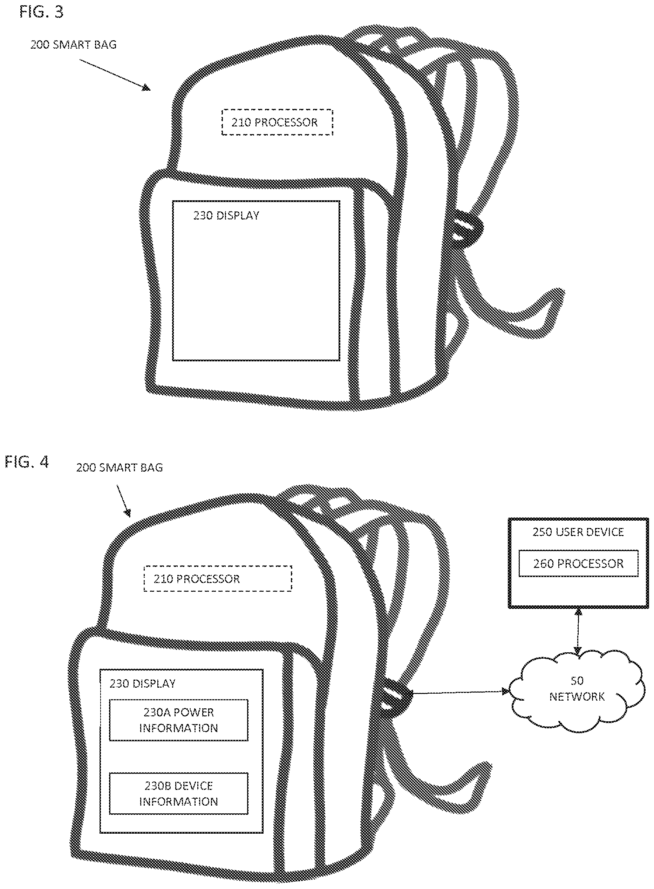

FIGS. 3 and 4 depict an example smart bag 200 with an integrated display. As with smart bag 100, smart bag 200 may comprise a book bag, purse, laptop bag, duffel bag, messenger bag, suitcase, or any other carrier suitable for executing the functionality described below. Smart bag 200 may comprise a processor 210, a display 230, a machine-readable storage medium, and/or other components. As with the processor of smart bag 100, processor 210 may be one or more CPUs, microprocessors, and/or other hardware devices suitable for retrieval and execution of instructions. As with the storage medium of smart bag 100, the machine-readable storage medium of smart bag 200 may be any hardware storage device for maintaining data accessible to smart bag 200 and may comprise information similar to that stored in the machine-readable storage medium of smart bag 100.

The processor 210 of smart bag 200 may execute computer readable instructions stored in the machine-readable storage medium integral to smart bag 200. The processor 210 may execute the computer readable instructions to perform functionality the same as or similar to the functionality performed by the display management engine 120 and/or other components of the smart bag 100.

As with the display management engine 120 and display 130 of smart bag 100, display management engine 220 may perform functionality similar to the functionality performed by display management engine 120. For example, display management engine 220 may cause display 230 to depict information similar or the same as the information depicted on display 130. For example, display 230 may depict power information and/or device information similar to the power information and/or device information depicted via display 130.

In some examples, not falling under the scope of the present invention, smart bag 200 may not comprise a set of power sources and display management engine 220 may cause display 230 to depict only device information, power information related only to the devices communicably coupled to the smart bag 200, or any combination thereof.

As with device 150, device 250 may comprise a laptop computing device, a desktop computing device, an all-in-one computing device, a tablet computing device, a mobile phone, an electronic book reader, a network-enabled appliance such as a "Smart" television, a server, and/or other electronic device suitable for executing the functionality described in correlation with device 150. Device 250 may comprise a processor 260, and/or other components. As with the processor of device 150, processor 260 may be one or more CPUs, microprocessors, and/or other hardware devices suitable for retrieval and execution of instructions. As with the storage medium of device 150, the machine-readable storage medium of device 250 may be any hardware storage device for maintaining data accessible to device 250 and may comprise information similar to that stored in the machine-readable storage medium of device 150.

The processor 260 of device 250 may execute computer readable instructions stored in the machine-readable storage medium integral to device 250. The processor 260 may execute the computer readable instructions to perform functionality the same as or similar to the functionality performed by the device display management engine 152 and/or other components of the device 150.

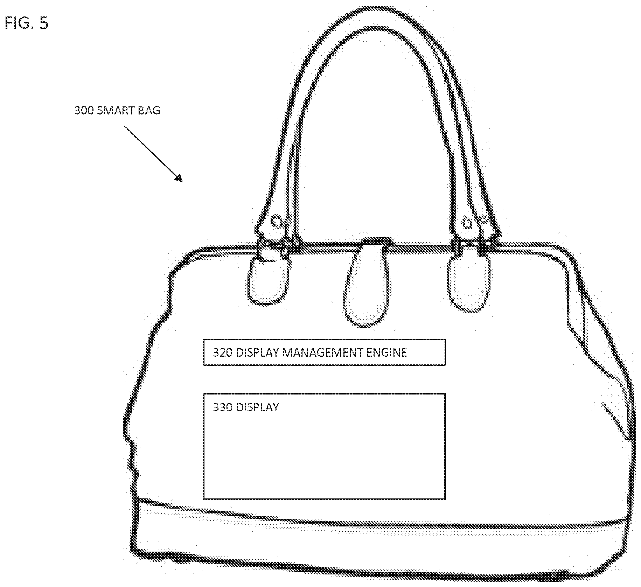

FIG. 5 is a depiction of an example smart bag 300 with an integrated display. The example smart bag 300 depicted in FIG. 5 may comprise a book bag, purse, laptop bag, duffel bag, messenger bag, suitcase, or any other carrier suitable for executing the functionality described below. Smart bag 300 may also comprise a set of hardware components the same as or similar to smart bags 100 and 200. As with processor 210 of FIG. 3, processor of smart bag 300 may be one or more CPUs, microprocessors, and/or other hardware devices suitable for retrieval and execution of instructions. Also similar to processor 210 of FIG. 3, processor of smart bag 300 may execute machine readable-instructions to perform functionality the same as or similar to the functionality performed by processor 210, display management engine 120 of FIG. 1, and/or other functionality performed by smart bag 100 or smart bag 200. As with the storage mediums of smart bags 100 and/or 200, machine-readable storage medium of FIG. 5 may be any hardware storage device for maintaining data accessible to smart bag 300 and may comprise information similar to that stored in storage medium of smart bags 100 and/or 200.

The display 330 of smart bag 300 may comprise similar hardware components as the display 130 of smart bag 100 and display 230 of smart bag 200. The display management engine 320 of smart bag 300 may perform functionality similar to display management engine 120 as describe above.

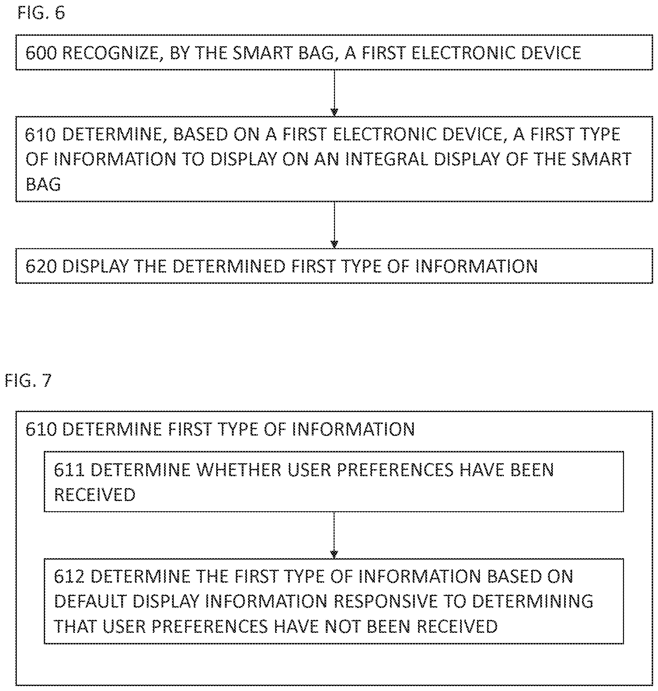

FIG. 6 is a flowchart of an example method for execution by a smart bag with an integrated display.

Although execution of the method described below is with reference to smart bag 100 of FIGS. 1 and 2, other suitable devices for execution of this method will be apparent to those of skill in the art (e.g., smart bag 200, smart bag 300, and/or other devices). The method described in FIG. 6 and other figures may be implemented in the form of executable instructions stored on a machine-readable storage medium, by one or more engines described herein, and/or in the form of electronic circuitry.

In an operation 600, a display management component of the smart bag may recognize a first electronic device. The display management component may comprise, for example, the display management engine 120 of smart bag 100, the processor 210 of smart bag 200, the processor of smart bag 300, and/or other hardware component capable of performing the functionality described herein. For example, the smart bag 100 (and/or the display management engine 120, processor, or other resource of the smart bag 100) may recognize the first electronic device. The smart bag 100 may recognize the first electronic device in a manner similar or the same as that described above in relation to the execution of the display management engine 120, processor, or other resource of the smart bag 100.

In an operation 610, a first type of information to display on the integral display of the smart bag may be determined based on the first electronic. For example, the smart bag 300 (and/or the display management engine 120, processor, or other resource of the smart bag 100) may determine the first type of information to display. The smart bag 100 may determine the first type of information to display in a manner similar or the same as that described above in relation to the execution of the display management engine 120, processor, or other resource of the smart bag 100.

The first type of information may be determined in various manners. FIG. 7 depicts an example method in which the first type of information is displayed.

In an operation 611, a determination may be made as to whether user preferences have been received. For example, the smart bag 300 (and/or the display management engine 120, processor, or other resource of the smart bag 100) may determine whether user preferences have been received. The smart bag 100 may determine whether user preferences have been received in a manner similar or the same as that described above in relation to the execution of the display management engine 120, processor, or other resource of the smart bag 100.

In an operation 612, default information may be displayed responsive to determining that user preferences have not been received. For example, the smart bag 300 (and/or the display management engine 120, processor, or other resource of the smart bag 100) may display default information responsive to determining that user preferences have not been received. The smart bag 100 may display default information responsive to determining that user preferences have not been received in a manner similar or the same as that described above in relation to the execution of the display management engine 120, processor, or other resource of the smart bag 100.

Returning to FIG. 6, in an operation 620, the determined information may be displayed via the integral display. For example, the smart bag 100 (and/or the display management engine 120, processor, or other resource of the smart bag 100) may display the determined information. The smart bag 100 may display the determined information in a manner similar or the same as that described above in relation to the execution of the display management engine 120, processor, or other resource of the smart bag 100.

The foregoing disclosure describes a number of examples of a smart bag with an integrated display. The disclosed examples of types of smart bags may include book bags, purses, laptop bags, duffel bag, messenger bags, and/or other types of smart bags with an integrated display. For purposes of explanation, certain examples are described with reference to the components illustrated in FIGS. 1-7. The functionality of the illustrated components may overlap, however, and may be present in a fewer or greater number of elements and components. Further, all or part of the functionality of illustrated elements may co-exist or be distributed among several geographically dispersed locations. Moreover, the disclosed examples may be implemented in various environments and are not limited to the illustrated examples.

Further, the sequence of operations described in connection with FIGS. 1-7 are examples and are not intended to be limiting. Additional or fewer operations or combinations of operations may be used or may vary without departing from the scope of the disclosed examples. Furthermore, implementations consistent with the disclosed examples need not perform the sequence of operations in any particular order. Thus, the present disclosure merely sets forth possible examples of implementations, and many variations and modifications may be made to the described examples. All such modifications and variations are intended to be included within the scope of this invention provided that they fall under the scope of the invention as defined in the appended claims.

## Claims

1. A smart bag (100, 200, 300) with an integrated display, the smart bag (100, 200, 300) comprising:
a set of power sources (110) integral to the smart bag, the set of power sources (110) comprising multiple power sources (110) to provide power to a set of electronic devices;
a display (130; 230; 330) integral to the smart bag; and
a display management engine (120, 320) that manages the display of information via the integral display (130; 230; 330) wherein the smart bag is configured to be coupled to a user device (150, 250) via a network,
said smart bag being **characterised in that** the display management engine
provides an alert to the user device (150, 250), the alert comprising information relating to an amount of power available from the smart bag.

2. The smart bag (100, 200, 300) of claim 1, wherein the display management engine (120, 320):
displays power information via the integral display (130; 230; 330).

3. The smart bag (100, 200, 300) of claim 2, wherein the power information comprises information about an amount of power available via the set of power sources (110) integral to the smart bag.

4. The smart bag (100, 200, 300) of claim 1, wherein the display management engine (120, 320):
displays device information via the integral display (130; 230; 330), the device information comprising information about a set of electronic devices coupled to the smart bag.

5. The smart bag (100, 200, 300) of claim 4, wherein the device information comprises information provided by an application running on a first electronic device of the set of electronic devices.

6. The smart bag (100, 200, 300) of claim 1, wherein the display management engine (120, 320):
receives user preferences from a user device (150, 250), wherein the user preferences comprise information regarding the types of data to be displayed via the integral display (130; 230; 330).

7. The smart bag (100, 200, 300) of claim 6, wherein the display management engine (120, 320):
manages display of information via the integrated display (130; 230; 330) responsive to receiving the user preferences from the user device (150, 250).

8. The smart bag (100, 200, 300) of claim 1, wherein the display management engine (120, 320):
displays information provided about a first electronic device of the set of electronic devices responsive to determining that the first electronic device is within a predetermined proximity of the smart bag.

9. A method for displaying information via a smart bag (100, 200, 300) with an integrated display (130; 230; 330), the method comprising:
recognizing, by the smart bag, a first electronic device;
determining, by a display management component of the smart bag, a first type of information to display from the first electronic device;
displaying, by the display management component, the determined first type of information via the integrated display (130; 230; 330); and
providing an alert to a user device (150, 250) via a network, the alert comprising information relating to an amount of power available from the smart bag.

10. The method of claim 9, wherein determining the first type of information to display comprises:
determining whether user preferences have been received;
responsive to determining that user preferences have not been received, determining the first type of information to display based on default display preferences.

11. The method of claim 9, wherein the first type of information may comprise power information related to a power level of the first device or device information about the first device.

## Patentansprüche

1. Smart-Bag (100, 200, 300) mit einer integrierten Anzeige, wobei die Smart-Bag (100, 200, 300) Folgendes umfasst:
einen Satz von Energiequellen (110), der in die Smart-Bag integriert ist, wobei der Satz von Energiequellen (110) mehrere Energiequellen (110) umfasst, um Energie für einen Satz von elektronischen Geräten bereitzustellen;
eine Anzeige (130; 230; 330), die in die Smart-Bag integriert ist; und
eine Anzeige-Verwaltungsmaschine (120, 320), die die Anzeige von Informationen über die integrierte Anzeige (130; 230; 330) verwaltet,
wobei die Smart-Bag so konfiguriert ist, dass sie über ein Netzwerk mit einem Benutzergerät (150, 250) gekoppelt wird,
wobei die Smart-Bag **dadurch gekennzeichnet ist, dass** die Anzeige-Verwaltungsmaschine eine Warnung an das Benutzergerät (150, 250) abgibt, wobei die Warnung Informationen bezüglich einer von der Smart-Bag verfügbaren Energiemenge umfasst.

2. Smart-Bag (100, 200, 300) nach Anspruch 1, wobei die Anzeige-Verwaltungsmaschine (120, 320):
Energieinformationen über die integrierte Anzeige (130; 230; 330) anzeigt.

3. Smart-Bag (100, 200, 300) nach Anspruch 2, wobei die Energieinformationen Informationen über eine Energiemenge umfassen, die über den Satz von Energiequellen (110) verfügbar ist, der in die Smart-Bag integriert ist.

4. Smart-Bag (100, 200, 300) nach Anspruch 1, wobei die Anzeige-Verwaltungsmaschine (120, 320):
Geräteinformationen über die integrierte Anzeige (130; 230; 330) anzeigt, wobei die Geräteinformationen Informationen über einen Satz von elektronischen Geräten umfassen, die mit der Smart-Bag gekoppelt sind.

5. Smart-Bag (100, 200, 300) nach Anspruch 4, wobei die Geräteinformationen Informationen umfassen, die von einer Anwendung bereitgestellt werden, die auf einem ersten elektronischen Gerät des Satzes von elektronischen Geräten läuft.

6. Smart-Bag (100, 200, 300) nach Anspruch 1, wobei die Anzeige-Verwaltungsmaschine (120, 320):
Benutzerpräferenzen von einem Benutzergerät (150, 250) empfängt, wobei die Benutzerpräferenzen Informationen bezüglich der Arten von Daten umfassen, die über die integrierte Anzeige (130; 230; 330) angezeigt werden sollen.

7. Smart-Bag (100, 200, 300) nach Anspruch 6, wobei die Anzeige-Verwaltungsmaschine (120, 320):
die Anzeige von Informationen über die integrierte Anzeige (130; 230; 330) verwaltet, als Reaktion auf das Empfangen der Benutzerpräferenzen von dem Benutzergerät (150, 250).

8. Smart-Bag (100, 200, 300) nach Anspruch 1, wobei die Anzeige-Verwaltungsmaschine (120, 320):
Informationen anzeigt, die über ein erstes elektronisches Gerät des Satzes von elektronischen Geräten bereitgestellt werden, als Reaktion auf das Bestimmen, dass sich das erste elektronische Gerät in einer vorbestimmten Nähe der Smart-Bag befindet.

9. Verfahren zum Anzeigen von Informationen über eine Smart-Bag (100, 200, 300) mit einer integrierten Anzeige (130; 230; 330), wobei das Verfahren Folgendes umfasst:
Erkennen eines ersten elektronischen Geräts durch die Smart-Bag;
Bestimmen, durch eine Anzeige-Verwaltungskomponente der Smart-Bag, eines ersten Typs von Informationen, die von dem ersten elektronischen Gerät angezeigt werden sollen;
Anzeigen, durch die Anzeige-Verwaltungskomponente, des ermittelten ersten Typs von Informationen über die integrierte Anzeige (130; 230; 330); und
Abgeben einer Warnung an ein Benutzergerät (150, 250) über ein Netzwerk, wobei die Warnung Informationen bezüglich einer von der Smart-Bag verfügbaren Energiemenge umfasst.

10. Verfahren nach Anspruch 9, wobei das Bestimmen des ersten Typs der anzuzeigenden Informationen Folgendes umfasst:
Bestimmen, ob Benutzerpräferenzen empfangen wurden;
als Reaktion auf das Bestimmen, dass Benutzerpräferenzen nicht empfangen wurden,
Bestimmen des ersten Typs von Informationen, die angezeigt werden sollen, basierend auf den Standard-Anzeigepräferenzen.

11. Verfahren nach Anspruch 9, wobei der erste Typ von Informationen Energieinformationen in Bezug auf ein Energieniveau des ersten Geräts oder Geräteinformationen über das erste Gerät umfassen kann.

## Revendications

1. Sac intelligent (100, 200, 300) doté d'un affichage intégré, le sac intelligent (100, 200, 300) comprenant :
un ensemble de sources d'énergie (110) intégrées au sac intelligent, l'ensemble de sources d'énergie (110) comprenant de multiples sources d'alimentation (110) pour fournir une alimentation à un ensemble de dispositifs électroniques ;
un affichage (130 ; 230 ; 330) intégré au sac intelligent ; et
un moteur de gestion d'affichage (120, 320) qui gère l'affichage d'informations par l'intermédiaire de l'affichage intégré (130 ; 230 ; 330)
dans lequel le sac intelligent est configuré pour être couplé à un dispositif utilisateur (150, 250) par l'intermédiaire d'un réseau,
ledit sac intelligent étant **caractérisé en ce que** le moteur de gestion d'affichage fournit une alerte au dispositif utilisateur (150, 250), l'alerte comprenant des informations relatives à une quantité d'énergie disponible du sac intelligent.

2. Sac intelligent (100, 200, 300) selon la revendication 1, dans lequel le moteur de gestion d'affichage (120, 320) :
affiche des informations concernant l'énergie par l'intermédiaire de l'affichage intégré (130 ; 230 ; 330).

3. Sac intelligent (100, 200, 300) selon la revendication 2, dans lequel les informations concernant l'énergie comprennent des informations concernant une quantité d'énergie disponible par l'intermédiaire de l'ensemble de sources d'énergie (110) intégrées au sac intelligent.

4. Sac intelligent (100, 200, 300) selon la revendication 1, dans lequel le moteur de gestion d'affichage (120, 320) :
affiche des informations de dispositif par l'intermédiaire de l'affichage intégré (130 ; 230 ; 330), les informations de dispositif comprenant des informations concernant un ensemble de dispositifs électroniques couplés au sac intelligent.

5. Sac intelligent (100, 200, 300) selon la revendication 4, dans lequel les informations de dispositif comprennent des informations fournies par une application s'exécutant sur un premier dispositif électronique de l'ensemble de dispositifs électroniques.

6. Sac intelligent (100, 200, 300) selon la revendication 1, dans lequel le moteur de gestion d'affichage (120, 320) :
reçoit des préférences utilisateur d'un dispositif utilisateur (150, 250), les préférences utilisateur comprenant des informations concernant les types de données à afficher par l'intermédiaire de l'affichage intégré (130 ; 230 ; 330).

7. Sac intelligent (100, 200, 300) selon la revendication 6, dans lequel le moteur de gestion d'affichage (120, 320) :
gère l'affichage d'informations par l'intermédiaire de l'affichage intégré (130 ; 230 ; 330) en réponse à la réception de préférences utilisateur du dispositif utilisateur (150, 250).

8. Sac intelligent (100, 200, 300) selon la revendication 1, dans lequel le moteur de gestion d'affichage (120, 320) :
affiche des informations fournies concernant un premier dispositif électronique de l'ensemble de dispositifs électroniques en réponse à la détermination que le premier dispositif électronique se trouve à une proximité prédéterminée du sac intelligent.

9. Procédé pour l'affichage d'informations par l'intermédiaire d'un sac intelligent (100, 200, 300) doté d'un affichage intégré (130 ; 230 ; 330), le procédé comprenant :
la reconnaissance, par le sac intelligent, d'un premier appareil électronique ;
la détermination, par un composant de gestion d'affichage du sac intelligent, d'un premier type d'informations à afficher du premier dispositif électronique ;
l'affichage, par le composant de gestion d'affichage, du premier type déterminé d'informations par l'intermédiaire de l'affichage intégré (130 ; 230 ; 330) ; et
la fourniture d'une alerte à un dispositif utilisateur (150, 250) par l'intermédiaire d'un réseau, l'alerte comprenant des informations relatives à une quantité d'énergie disponible du sac intelligent.

10. Procédé selon la revendication 9, dans lequel la détermination du premier type d'informations à afficher comprend :
la détermination de savoir si les préférences utilisateur ont été reçues ou non ;
en réponse à la détermination du fait que les préférences utilisateur n'ont pas été reçues, la détermination du premier type d'informations à afficher sur la base des préférences d'affichage par défaut.

11. Procédé selon la revendication 9, dans lequel le premier type d'informations peut comprendre des informations concernant l'énergie liées à un niveau d'énergie du premier dispositif ou d'informations de dispositif concernant le premier dispositif.
